# EUROPÄISCHE PATENTSCHRIFT

(11) **EP 3 158 315 B1**
(45) Veröffentlichungstag und Bekanntmachung des Hinweises auf die Patenterteilung: **27.03.2019**
(21) Anmeldenummer: 15727350.9
(22) Anmeldetag: 29.05.2015
(51) Int. Cl.: G01N 15/06, F01N 11/00, F02D 41/04, F02D 41/14

(54) **VERFAHREN ZUM BETRIEB EINES PARTIKELSENSORS**
METHOD FOR OPERATING A PARTICLE SENSOR
PROCÉDÉ POUR FAIRE FONCTIONNER UN DÉTECTEUR DE PARTICULES

(30) Priorität: 17.06.2014 DE 102014211533
(43) Veröffentlichungstag der Anmeldung: 26.04.2017
(73) Patentinhaber: Robert Bosch GmbH, 70442 Stuttgart (DE)
(72) Erfinder: BAARS, Enno, 71229 Leonberg (DE); TIEFENBACH, Andy, 71665 Vaihingen-Horrheim (DE); BESSEN, Michael, 70190 Stuttgart (DE)
(86) Internationale Anmeldenummer: PCT/EP2015/061952
(87) Internationale Veröffentlichungsnummer: WO 2015/193079

(56) Entgegenhaltungen:
- EP-A1- 2 202 509
- DE-A1-102008 031 648
- DE-A1-102012 205 584
- US-A1- 2009 090 622
- US-A1- 2012 260 636

## Beschreibung

### Stand der Technik

Um die Funktionstüchtigkeit aktueller in Kraftfahrzeugen eingesetzter Abgasnachbehandlungssysteme zu überprüfen bzw. zu überwachen, werden Sensoren benötigt, mit denen eine genaue Ermittlung der in einem Verbrennungsabgas vorliegenden Partikelkonzentration ermöglicht werden kann. Darüber hinaus soll mittels derartiger Sensoren eine Beladungsprognose beispielsweise eines in einem Abgassystem vorgesehenen Dieselpartikelfilters ermöglicht werden, um eine hohe Systemsicherheit zu erreichen und dadurch kostengünstigere Filtermaterialien einsetzen zu können.

Aus der DE 10 2006 009 066 ist ein Sensor zur Detektion von Partikeln in einem Fluidstrom bekannt, der auf der Basis eines keramischen Mehrlagensubstrats ausgeführt ist. Er umfasst zwei voneinander beabstandete Messelektroden, die dem zu untersuchenden Verbrennungsabgas ausgesetzt sind. Lagert sich zwischen den beiden Messelektroden Ruß ab, so kommt es beim Anlegen einer Gleichspannung an die Messelektroden zu einem Stromfluss zwischen den Messelektroden. Ein schichtförmig ausgeführtes Heizelement ermöglicht es, die Elektroden bzw. deren Umgebung auf thermischem Wege, durch Abbrand von abgelagerten Rußpartikeln zu befreien und den Sensor auf diese Weise zu regenerieren.

Aus der DE 10 2008 031 648 A1 ist ein Verfahren nach dem Oberbegriff des Anspruchs 1 zum Betrieb eines Partikelsensors bekannt.

Nach erfolgreicher Regeneration ist die nächste Messphase vorgesehen, in der sich wiederum zwischen den Messelektroden Ruß ablagert.

Wenn die Temperatur des Sensorelements während der Messphase eine Grenztemperatur, beispielsweise 100 °C, unterschreitet, kann es an dem Sensorelement zur Kondensation von Wasserdampf kommen. Das an und zwischen den Messelektroden anhaftende Kondensat macht die laufende Messung in aller Regel unbrauchbar, so dass diese Messphase unterbrochen werden muss. Es muss dann zunächst eine Regeneration des Sensorelements erfolgen, indem dieses wieder in den ursprünglichen Zustand zurückversetzt wird. Erst anschließend kann eine neue Messphase beginnen.

Auf diese Weise verringert sich die zeitanteilige Verfügbarkeit des Partikelsensorsignals.

### Vorteile der Erfindung

Demgegenüber kommt durch die Merkmale der vorliegenden Erfindung nach Anspruch 1 die Wirkung zu Stande, dass Messphasen nicht abgebrochen werden brauchen, sondern fortgeführt werden können.

Erfindungsgemäß ist vorgesehen, dass während der Messphase die Temperatur des Sensorelements überwacht wird und eine Beheizung des Sensorelements durch das Heizelement vorgenommen wird, wenn die Temperatur des Sensorelements eine Grenztemperatur unterschreitet.

Die Grenztemperatur ist erfindungsgemäß eine konstante Temperatur im Bereich von 50 °C bis 200 °C. Vorzugsweise liegt sie im Bereich von 80 °C bis 150 °C.

Es ist bevorzugt, dass die Beheizung des Sensorelements durch das Heizelement während der Messephase nur mit geringer Heizleistung erfolgt, beispielsweise höchstens mit 2 W oder beispielsweise höchstens mit 10 % der maximalen Heizleistung des Heizelements oder der im Betrieb des Sensorelements maximal auftretenden Heizleistung des Heizelements.

Es ist bevorzugt, dass während der Beheizung des Sensorelements durch das Heizelement die Grenztemperatur höchstens geringfügig überschritten wird, insbesondere um höchstens 50 K.

Günstigerweise kann die Überwachung der Temperatur des Sensorelements mittels eines Temperaturmesselements erfolgen, das in das Sensorelement integriert ist.

Die vorangehend erläuterten Messphasen sind von optional vorgesehenen Regenerationsphase verschieden, in denen das Sensorelement durch das Heizelement auf eine Temperatur aufgeheizt werden kann, die oberhalb der Abbrandtemperatur von Ruß liegt und somit auch oberhalb der Grenztemperatur. Diese Temperatur kann beispielsweise 600 °C oder mehr betragen.

Das erfindungsgemäße Verfahren ist erfindungsgemäß im Zusammenhang mit Brennkraftmaschinen, die Teil eines Hybridantriebs eines Fahrzeugs sind, oder in Kombination mit einem Start-Stopp-System betrieben werden, vorgesehen. Hierbei treten Zustände im Abgas, bei denen es zu einer kritischen Auskühlung des Sensorelements kommen kann, besonders häufig auf.

Unter einem Hybridantrieb wird dabei insbesondere ein Antrieb verstanden, der einen Verbrennungsmotor zum Antrieb eines Fahrzeuges umfasst und ferner einen elektrischen Motor umfasst, durch den das Fahrzeug vom Verbrennungsmotor entkoppelt antreibbar ist. Unter einem Start-Stopp-System wird insbesondere ein verbrennungsmotorischer Antrieb für ein Fahrzeug verstanden, bei dem vorgesehen ist, dass bei bestimmten Betriebsbedingungen des Verbrennungsmotors oder des Fahrzeugs, zum Beispiel Leerlauf des Verbrennungsmotors und/oder Stillstand des Fahrzeugs, ein Motorstopp automatisiert vorgenommen wird. Insbesondere kann ein Motorstart nach Motorstopp aus Bedienersicht vereinfacht, beispielsweise durch Pedaldruck oder ähnliches, auslösbar sein.

Bei diesen Systemen ist charakteristisch, dass durch eine entsprechende Steuerung der verbrennungsmotorische Betrieb häufig unterbrochen wird. Problematisch dabei ist, dass in den Phasen des unterbrochenen verbrennungsmotorischen Betriebs kein warmes Verbrennungsabgas erzeugt wird und es somit vermehrt zu einer Abkühlung des im Abgastrakt angeordneten Sensorelements unter die Grenztemperatur kommen kann.

Durch das erfindungsgemäße Verfahren wird eine Auskühlung des Sensorelements stets insoweit verhindert, dass laufende Messphasen nicht abgebrochen werden brauchen.

### Zeichnung

Es zeigt
Figur 1 ein Sensorelement gemäß dem Stand der Technik
Figur 2 ein Blockschaltbild einer beispielhaften Beschaltung des Sensorelements
Figur 3 eine Sequenz des erfindungsgemäßen Verfahrens in einer unkritischen Situation
Figur 4 eine Sequenz des erfindungsgemäßen Verfahrens bei Abkühlung des Sensorelements unter eine Grenztemperatur

### Beschreibung der Ausführungsbeispiele

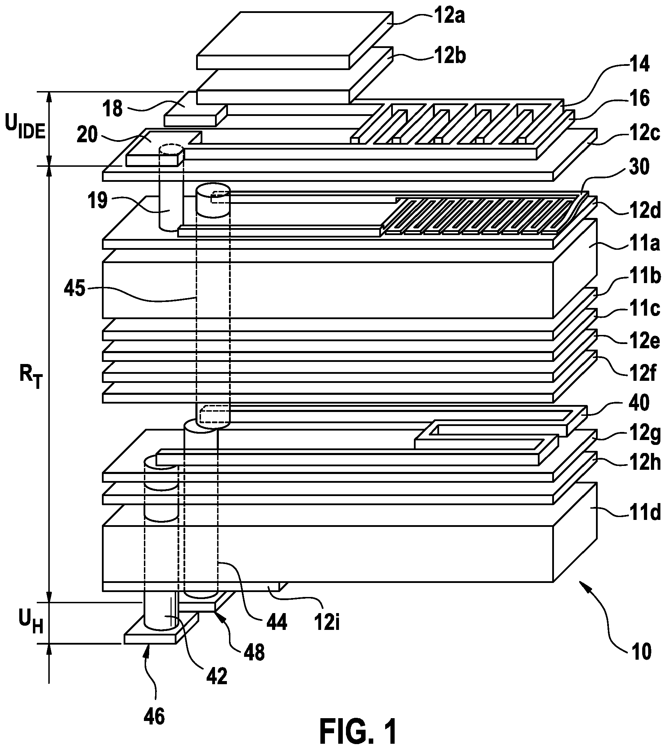

In Figur 1 ist ein aus dem Stand der Technik grundsätzlich bekannter Aufbau eines Sensorelements eines Partikelsensors dargestellt. Mit 10 ist ein keramisches Sensorelement bezeichnet, das der Bestimmung von Partikeln, wie beispielsweise Rußpartikeln, in einem das Sensorelement 10 umgebenden Gasgemisch dient. Das Sensorelement 10 umfasst beispielsweise eine Mehrzahl von sauerstoffionenleitenden Festelektrolytschichten 11a, 11b, 11c und 11d. Die Festelektrolytschichten 11a und 11d werden dabei als keramische Folien ausgeführt und bilden einen planaren keramischen Körper. Sie bestehen vorzugsweise aus einem sauerstoffionenleitenden Festelektrolytmaterial, wie beispielsweise mit Y₂O₃ stabilisiertem oder teilstabilisiertem ZrO₂.

Die Festelektrolytschichten 11b und 11c werden dagegen mittels Siebdruck eines pastösen keramischen Materials beispielsweise auf der Festelektrolytschicht 11a erzeugt. Als keramische Komponente des pastösen Materials wird dabei bevorzugt dasselbe Festelektrolytmaterial verwendet, aus dem auch die Festelektrolytschichten 11a, 11d bestehen.

Weiterhin weist das Sensorelement 10 beispielsweise eine Vielzahl von elektrisch isolierenden keramischen Schichten 12a, 12b, 12c, 12d, 12e, 12f, 12g, 12h und 12i auf. Die Schichten 12a - 12i werden dabei ebenfalls mittels Siebdruck eines pastösen keramischen Materials beispielsweise auf den Festelektrolytschichten 11a, 11c, 11d erzeugt. Als keramische Komponente des pastösen Materials wird dabei beispielsweise bariumhaltiges Aluminiumoxid verwendet, da dieses auch bei Temperaturwechselbeanspruchungen über einen langen Zeitraum einen weitgehend konstant hohen elektrischen Widerstand aufweist. Alternativ ist auch die Verwendung von Cerdioxid bzw. der Zusatz anderer Erdalkalioxide möglich.

Die integrierte Form des planaren keramischen Körpers des Sensorelementes 10 wird durch Zusammenlaminieren der mit den Festelektrolytschichten 11b, 11c und mit Funktionsschichten sowie den Schichten 12a - 12i bedruckten keramischen Folien und anschließendem Sintern der laminierten Struktur in an sich bekannter Weise hergestellt.

Das Sensorelement 10 weist weiterhin ein keramisches Heizelement 40 auf, das in Form einer elektrischen Widerstandsleiterbahn ausgeführt ist und der Aufheizung des Sensorelementes 10 insbesondere auf die Temperatur des zu bestimmenden Gasgemischs bzw. dem Abbrand der auf den Großflächen des Sensorelementes 10 abgelagerten Rußpartikel dient. Die Widerstandsleiterbahn ist vorzugsweise aus einem Cermet-Material ausgeführt; vorzugsweise als Mischung von Platin oder einem Platinmetall mit keramischen Anteilen, wie beispielsweise Aluminiumoxid. Die Widerstandsleiterbahn ist weiterhin vorzugsweise in Form eines Mäanders ausgebildet und weist an beiden Enden Durchkontaktierungen 42, 44 sowie elektrische Kontakte 46, 48 auf. Durch Anlegen einer entsprechenden Heizspannung U_{H} an die Kontakte 46, 48 der Widerstandsleiterbahn kann die Heizleistung des Heizelementes 40 entsprechend reguliert werden.

Auf einer Großfläche des Sensorelementes 10 sind beispielsweise zwei Messelektroden aufgebracht, die vorzugsweise als ineinander verzahnte Interdigitalelektroden ausgebildet sind und ein Messelement bilden. Die Verwendung von Interdigitalelektroden als Messelektroden ermöglicht vorteilhafterweise eine besonders genaue Bestimmung des elektrischen Widerstandes bzw. der elektrischen Leitfähigkeit des sich zwischen den Messelektroden befindenden Oberflächenmaterials. Zur Kontaktierung der Messelektroden sind im Bereich eines dem Gasgemisch abgewandten Endes des Sensorelementes Kontakte 18, 20 vorgesehen. Dabei sind die Zuleitungsbereiche der Elektroden vorzugsweise durch die elektrisch isolierenden Schichten 12a, 12b gegenüber den Einflüssen eines das Sensorelement 10 umgebenden Gasgemischs abgeschirmt.

Auf der mit den Messelektroden versehenen Großfläche des Sensorelementes 10 kann zusätzlich eine aus Übersichtlichkeitsgründen nicht dargestellte poröse Deck- oder Schutzschicht vorgesehen sein, die die Messelektroden in ihrem ineinander verzahnten Bereich gegenüber einem direkten Kontakt mit dem zu bestimmenden Gasgemisch abschirmt. Dabei ist die Schichtdicke der porösen Schutzschicht vorzugsweise größer als die Schichtdicke der Messelektroden. Die poröse Schutzschicht ist vorzugsweise offenporös ausgeführt, wobei die Porengröße so gewählt wird, dass die zu bestimmenden Partikel im Gasgemisch in die Poren der porösen Schutzschicht eindiffundieren können. Die Porengröße der porösen Schutzschicht liegt dabei vorzugsweise in einem Bereich von 2 bis 10 µm. Die poröse Schutzschicht ist aus einem keramischen Material ausgeführt, das vorzugsweise dem Material der Schicht 12a ähnlich ist oder diesem entspricht und kann mittels Siebdruck hergestellt werden. Die Porosität der porösen Schutzschicht kann durch Zusatz von Porenbildnern zu der Siebdruckpaste entsprechend eingestellt werden.

Während des Betriebs des Sensorelementes 10 wird an die Messelektroden eine Spannung U_{IDE} angelegt. Da die Messelektroden auf der Oberfläche der elektrisch isolierenden Schicht 12c angeordnet sind, kommt es zunächst im Wesentlichen zu keinem Stromfluss zwischen den Messelektroden.

Enthält ein das Sensorelement 10 umströmendes Gasgemisch Partikel, insbesondere Ruß, so lagert sich dieser auf der Oberfläche des Sensorelementes 10 ab. Da Ruß eine bestimmte elektrische Leitfähigkeit aufweist, kommt es bei ausreichender Beladung der Oberfläche des Sensorelementes 10 bzw. der porösen Schutzschicht mit Ruß zu einem ansteigenden Stromfluss I_{IDE} zwischen den Messelektroden, der mit dem Ausmaß der Beladung korreliert.

Wird nun an die Messelektroden eine Gleichspannung U_{IDE} angelegt und der zwischen den Messelektroden auftretende Stromfluss ermittelt, so kann aus dem Stromfluss auf die abgelagerte Partikelmasse bzw. auf den aktuellen Partikelmassenstrom, insbesondere Rußmassenstrom, und auf die Partikelkonzentration im Gasgemisch geschlossen werden. Mit dieser Messmethode wird die Konzentration all derjenigen Partikel in einem Gasgemisch erfasst, die die elektrische Leitfähigkeit des sich zwischen den Messelektroden befindenden keramischen Materials positiv oder negativ beeinflussen.

Eine weitere Möglichkeit besteht darin, den Anstieg des Stromflusses über der Zeit zu ermitteln und aus dem Quotienten aus Stromflussanstieg und Zeit bzw. aus dem Differentialquotienten des Stromflusses nach der Zeit auf die abgelagerte Partikelmasse bzw. auf den aktuellen Partikelmassenstrom, insbesondere Rußmassenstrom, und auf die Partikelkonzentration im Gasgemisch zu schließen. Eine Berechnung der Partikelkonzentration ist auf der Basis der Messwerte möglich, sofern die Strömungsgeschwindigkeit des Gasgemisches bekannt ist. Diese bzw. der Volumenstrom des Gasgemisches kann bspw. mittels eines geeigneten weiteren Sensors bestimmt werden.

Darüber hinaus umfasst das Sensorelement 10 ein Temperaturmesselement 30, das vorzugsweise in Form einer elektrischen Widerstandsleiterbahn ausgeführt ist. Die Widerstandsleiterbahn ist beispielsweise aus einem ähnlichen oder demselben Material ausgeführt, wie das der Widerstandsleiterbahn des Heizelementes 40. Die Widerstandsleiterbahn des Temperaturmesselementes 30 ist vorzugsweise in Form eines Mäanders ausgeführt, wobei einer der Anschlüsse der Widerstandsleiterbahn vorzugsweise mit dem Kontakt 48 über eine Durchkontaktierung 45 verbunden ist. Ein weiterer elektrischer Anschluss des Temperaturmesselements 30 ist vorzugsweise mit einem der Kontakte 18, 20 über eine weitere Durchkontaktierung 19 leitend verbunden. Durch Anlegen einer entsprechenden Spannung an die Anschlüsse 20, 48 der Widerstandsleiterbahn und durch Bestimmen des elektrischen Widerstandes R_{T} derselben kann auf die Temperatur des Sensorelementes 10 geschlossen werden. Alternativ ist eine Temperaturbestimmung mittels Thermoelementen möglich. Eine weitere alternative bzw. zusätzliche Möglichkeit der Tempraturmessung besteht darin, die per se temperaturabhängige Leitfähigkeit des zwischen der Widerstandsleiterbahn des Temperaturmesselements 30 und den Messelektroden angeordneten keramischen Körpers zu bestimmen und aus dessen Höhe auf die Temperatur des Sensorelementes zu schließen.

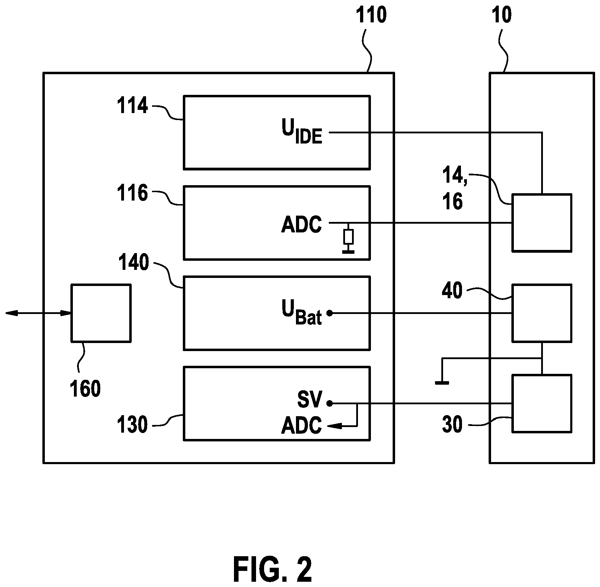

Die Figur 2 zeigt eine mögliche Beschaltung 110 für das Sensorelements 10 als Blockschaltbild. Die Beschaltung 110 kann beispielsweise in einem Stecker des Partikelsensors integriert sein.

Demgemäß ist das Temperaturmesselement 30 mit einer Temperaturmesseinheit 130 der Beschaltung 110 verbunden und zwischen ein Erdpotenzial und eine Versorgungsspannung von 5 V geschaltet. Entsprechend dem elektrischen Widerstand des Temperaturmesselements 30 kann aus dem resultierenden Stromfluss auf die Temperatur des Sensorelements 10 geschlossen werden.

Das Heizelement 40 ist mit einer Heizereinheit 140 der Beschaltung 110 verbunden und zwischen ein Erdpotenzial und eine Batteriespannung von 12 V geschaltet. Die von dem Heizelement 40 erzeugte effektive Heizleistung kann beispielsweise mittels Pulsweitenmodulation eingestellt werden.

Zwischen den Messelektroden 14, 16 liegt eine Messspannung U_{IDE} von beispielsweise 46 V an. Entsprechend dem elektrischen Widerstand zwischen den Messelektroden 14, 16 kann aus dem resultierenden Stromfluss auf eine Partikelanlagerung im Bereich zwischen den Messelektroden 14, 16 geschlossen werden.

Teil der Beschaltung ist ferner eine Kommunikationseinheit 160, zur Kommunikation mit einem Motorsteuergerät, das beispielsweise als CAN-Interface ausgebildet ist.

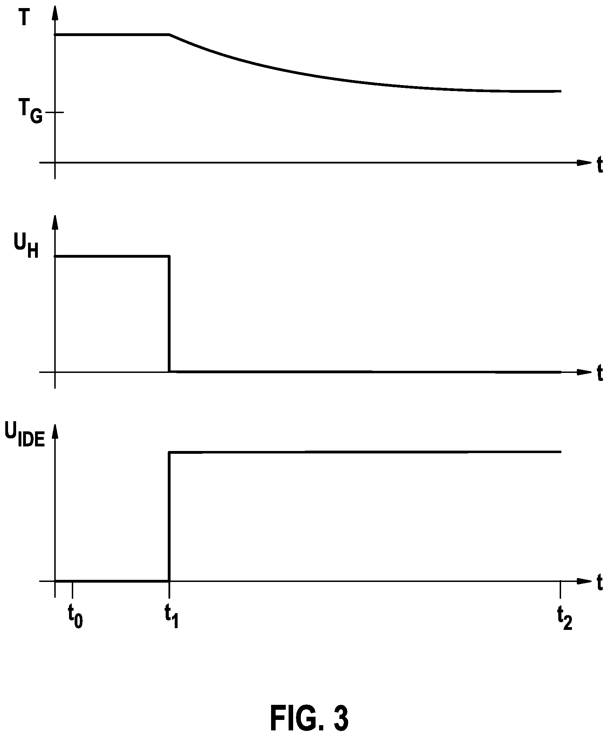

Die Figur 3 zeigt eine Sequenz des erfindungsgemäßen Verfahrens in einer unkritischen Situation, die beispielsweise einer Situation entspricht, in der das Sensorelement 10 ständig mit heißem Abgas beaufschlagt wird.

Im oberen Teil der Figur 3 ist die Temperatur T des Sensorelements 10 dargestellt, wie sie beispielsweise mit der Temperaturmesseinheit 130 ermittelbar ist. Im mittleren Teil der Figur 3 ist der Effektivwert der an dem Heizelement 40 anliegenden Spannung U_{H} dargestellt. Im unteren Teil der Figur 3 ist die Messspannung U_{IDE} dargestellt.

Während einer ersten Regenerationsphase, im Zeitraum zwischen t0 und t1, beträgt die zwischen den Messelektroden 14, 16 anliegende Messspannung U_{IDE} 0 V, der Effektivwert der an dem Heizelement 40 anliegenden Spannung U_{H} hat einen hohen, insbesondere maximalen Wert, beispielsweise 12 V, entsprechend ist auch die Temperatur T des Sensorelements 10 hoch, beispielsweise 600 °C.

Zum Zeitpunkt t1 endet die erste Regenerationsphase und es schließt sich eine erste Messephase an. Zu diesem Zweck wird zwischen die Messelektroden 14, 16 eine Messspannung U_{IDE} von 46 V angelegt und das Heizelement 40 wird deaktiviert (0 V).

Entsprechend der deaktivierten Beheizung sinkt die Temperatur T des Sensorelements 10 ab, allerdings verbleibt sie bis zum Ende der Messephase zum Zeitpunkt t2 oberhalb der Grenztemperatur T_{G}, also in einem unkritischen Bereich. Eine Aktivierung des Heizelements 40 während der Messephase ist insofern in diesem Beispiel nicht erforderlich.

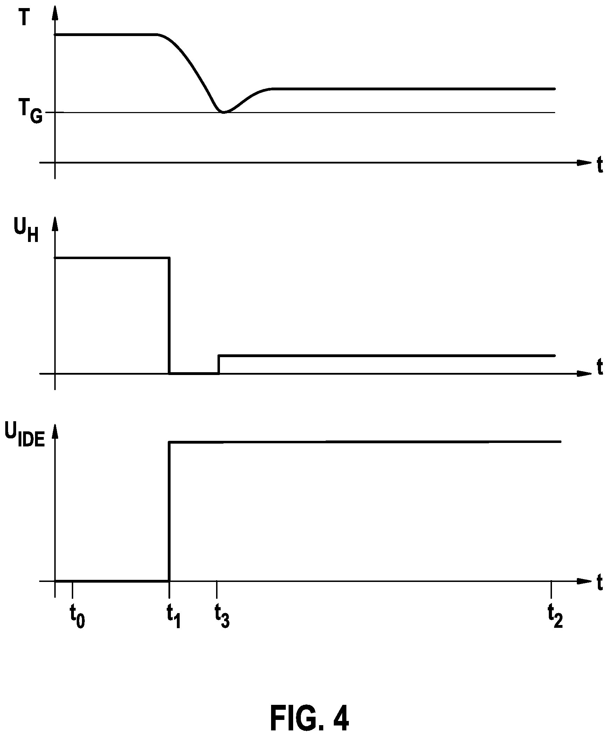

Die Figur 4 zeigt eine Sequenz des erfindungsgemäßen Verfahrens in einer Situation, in der die Gefahr des Auskühlens des Sensorelements 10 gegeben ist. Dies ist beispielsweise der Fall während elektrischem Fahrbetrieb bei einem Hybridfahrzeug und in Stopp-Phasen bei Start-Stopp-Systemen.

Anders als bei der in Figur 3 gezeigten Sequenz erreicht bzw. unterschreitet die Temperatur T des Sensorelements 10 zum Zeitpunkt t3 während der ersten Messephase die Grenztemperatur T_{G}, die beispielsweise 100 °C beträgt. In Reaktion auf dieser Auskühlung wird das Heizelement 40 insofern aktiviert, dass die Temperatur T des Sensorelements 10 etwas ansteigt, beispielsweise auf 120 °C und für den Rest der ersten Messephase bei diesem Wert verbleibt. Der Effektivwert der Heizerspannung U_{H} beträgt hierbei beispielsweise 2,5 V.

## Patentansprüche

1. Verfahren zur Bestimmung von Ruß im Abgas einer Brennkraftmaschine mittels eines Sensorelementes (10), das mindestens zwei dem Abgas ausgesetzte Messelektroden (14, 16) und ein Heizelement (40) aufweist, wobei an den mindestens zwei Messelektroden (14, 16) während einer Messephase eine Spannung (U_{IDE}) angelegt wird und der sich zwischen den Messelektroden (14, 16) einstellende Stromfluss (I_{IDE}) oder elektrische Widerstand bestimmt wird und als Maß für die Partikelkonzentration oder den Partikelmassenstrom ausgegeben wird, wobei während der Messphase die Temperatur (T) des Sensorelements (10) überwacht wird und eine Beheizung des Sensorelements (10) durch das Heizelement (40) vorgenommen wird, wenn die Temperatur (T) des Sensorelements (10) eine Grenztemperatur (T_{G}) unterschreitet, **dadurch gekennzeichnet,**
**dass** die Brennkraftmaschine Teil eines Hybridantriebs eines Fahrzeugs ist und/oder dass die Brennkraftmaschine Teil eines Fahrzeugs mit einem Start-Stopp-System ist, dass die Grenztemperatur (T_{G}) eine konstante Temperatur im Bereich von 50 °C bis 200 °C ist und dass die Beheizung bei Unterschreitung der Grenztemperatur (T_{G}) auch vorgenommen wird, während das Fahrzeug bei deaktivierter Brennkraftmaschine elektrisch angetrieben wird und/oder während einer Stoppphase.

2. Verfahren nach Anspruch 1, **dadurch gekennzeichnet, dass** die Grenztemperatur (T_{G}) eine Temperatur im Bereich von 80 °C bis 150 °C ist.

3. Verfahren nach Anspruch 1 oder 2 einem, **dadurch gekennzeichnet, dass** bei der Beheizung des Sensorelements (10) durch das Heizelement (40) die Grenztemperatur (T_{G}) höchstens geringfügig überschritten wird, insbesondere um höchstens 50 K.

4. Verfahren nach einem der vorangehenden Ansprüche, **dadurch gekennzeichnet, dass** das Sensorelement (10) ein Temperaturmesselement (30) aufweist, und die Überwachung der Temperatur des Sensorelements (10) mittels des Temperaturmesselements (30) erfolgt.

5. Verfahren nach einem der vorangehenden Ansprüche, **dadurch gekennzeichnet, dass** Regenerationsphasen vorgesehen sind, in denen das Sensorelement (10) durch das Heizelement (40) auf eine Temperatur aufgeheizt wird, die oberhalb der Abbrandtemperatur von Ruß liegt, insbesondere oberhalb von 600 °C.

## Claims

1. Method for determining soot in the exhaust gas of an internal combustion engine by means of a sensor element (10) which has at least two measuring electrodes (14, 16) which are subjected to the exhaust gas, and a heating element (40), wherein a voltage (U_{IDE}) is applied to the at least two measuring electrodes (14, 16) during a measuring phase, and the current flow (I_{IDE}) which occurs between the measuring electrodes (14, 16) or the electrical resistance is determined and is output as a measure of the particle concentration or the particle mass flow, wherein the temperature (T) of the sensor element (10) is monitored during the measuring phase and the sensor element (10) is heated by the heating element (40) if the temperature (T) of the sensor element (10) drops below a limiting temperature (T_{G}), **characterized in that** the internal combustion engine is part of a hybrid drive of a vehicle, and/or **in that** the internal combustion engine is part of a vehicle with a start/stop system, **in that** the limiting temperature (T_{G}) is a constant temperature in the range from 50°C to 200°C, and **in that** the heating is also carried out when the limiting temperature (T_{G}) is undershot while the vehicle is being driven electrically with the internal combustion engine deactivated and/or during a stop phase.

2. Method according to Claim 1, **characterized in that** the limiting temperature (T_{G}) is a temperature in the range from 80°C to 150°C.

3. Method according to Claim 1 or 2, **characterized in that** when the sensor element (10) is heated by the heating element (40) the limiting temperature (T_{G}) is at most slightly exceeded, in particular by at most 50 K.

4. Method according to one of the preceding claims, **characterized in that** the sensor element (10) is a temperature-measuring element (30), and the temperature of the sensor element (10) is monitored by means of the temperature-measuring element (30).

5. Method according to one of the preceding claims, **characterized in that** regeneration phases are provided in which the sensor element (10) is heated by the heating element (40) to a temperature which is above the burn-off temperature of soot, in particular above 600°C.

## Revendications

1. Procédé pour déterminer la présence de suie dans les gaz d'échappement d'un moteur à combustion interne au moyen d'un élément capteur (10), lequel possède au moins deux électrodes de mesure (14, 16) exposées aux gaz d'échappement et un élément chauffant (40), une tension (U_{IDE}) étant appliquée aux au moins deux électrodes de mesure (14, 16) durant une phase de mesure et le flux de courant (I_{IDE}) ou la résistance électrique qui s'établit entre les électrodes de mesure (14, 16) étant déterminé et étant délivré en sortie en tant que mesure pour la concentration de particules ou le débit massique de particules, la température (T) de l'élément capteur (10) étant surveillée durant la phase de mesure et un chauffage de l'élément capteur (10) par l'élément chauffant (40) étant effectué lorsque la température (T) de l'élément capteur (10) devient inférieure à une température limite (T_{G}), **caractérisé en ce que** le moteur à combustion interne fait partie d'un groupe propulseur hybride d'un véhicule et/ou **en ce que** le moteur à combustion interne fait partie d'un véhicule équipé d'un système d'arrêt et redémarrage automatique, **en ce que** la température limite (T_{G}) est une température constante dans la plage de 50 °C à 200 °C et **en ce que** le chauffage en cas de franchissement vers le bas de la température limite (T_{G}) est également effectué pendant que le véhicule est propulsé électriquement lorsque le moteur à combustion interne est désactivé et/ou pendant une phase d'arrêt.

2. Procédé selon la revendication 1, **caractérisé en ce que** la température limite (T_{G}) est comprise dans la plage de 80 °C à 150 °C.

3. Procédé selon la revendication 1 ou 2, **caractérisé en ce que** lors du chauffage de l'élément capteur (10) par l'élément chauffant (40), la température limite (T_{G}) est dépassée tout au plus très légèrement, notamment au maximum de 50 K.

4. Procédé selon l'une des revendications précédentes, **caractérisé en ce que** l'élément capteur (10) possède un élément de mesure de température (30) et la surveillance de la température de l'élément capteur (10) est effectuée au moyen de l'élément de mesure de température (30).

5. Procédé selon l'une des revendications précédentes, **caractérisé en ce que** des phases de régénération sont prévues, au cours desquelles l'élément capteur (10) est chauffé par l'élément chauffant (40) à une température qui est supérieure à la température de combustion de la suie, notamment supérieure à 600 °C.
